# EUROPÄISCHE PATENTSCHRIFT

(11) **EP 1 633 509 B1**
(45) Veröffentlichungstag und Bekanntmachung des Hinweises auf die Patenterteilung: **13.12.2006**
(21) Anmeldenummer: 04738675.0
(22) Anmeldetag: 14.06.2004
(51) Int. Cl.: B22C 7/00, B29C 67/00, B22C 1/10, B22F 3/105

(54) **VERFAHREN ZUM SCHICHTWEISEN AUFBAU VON MODELLEN**
METHOD FOR THE LAYERED CONSTRUCTION OF MODELS
PROCEDE DE REALISATION DE MODELES PAR COUCHES

(30) Priorität: 17.06.2003 DE 10327272
(43) Veröffentlichungstag der Anmeldung: 15.03.2006
(73) Patentinhaber: Voxeljet Gmbh (Vormals Generis Gmbh), 86167 Augsburg (DE)
(72) Erfinder: HÖCHSMANN, Rainer, 86682 Genderkingen (DE)
(74) Vertreter: Wagner, Sigrid
(86) Internationale Anmeldenummer: PCT/DE2004/001223
(87) Internationale Veröffentlichungsnummer: WO 2004/112988

(56) Entgegenhaltungen:
- EP-A- 0 739 666
- EP-A- 0 968 776
- WO-A-02/26419
- DE-C1- 19 723 892
- US-A- 6 147 138
- US-A- 6 155 331
- US-B1- 6 423 255

## Beschreibung

Die vorliegende Erfindung bezieht sich auf ein Verfahren zum schichtweisen Aufbau von Modellen.

Aus dem Stand der Technik ist es bekannt bei der werkzeuglosen Herstellung von Gießformen oder Gussmodellen das Rapid-Prototyping-Verfahren zu verwenden.

Aus der DE 198 53 834 A1 ist beispielsweise ein Rapid-Prototyping-Verfahren insbesondere zum Aufbau von Gussmodellen bekannt. Bei diesem Verfahren wird unbehandeltes Partikelmaterial, wie Quarzsand, auf eine Bauplattform in einer dünnen Schicht aufgetragen. Danach wird mit Hilfe einer Spray-Vorrichtung ein Bindemittel auf das gesamte Partikelmaterial in möglichst feiner Verteilung aufgesprüht. Anschließend wird darüber auf ausgewählte Bereiche Härter dosiert, wodurch erwünschte Bereiche des Partikelmaterials verfestigt werden. Nach mehrmaliger Wiederholung dieses Vorgangs kann ein individuell geformter Körper aus dem gebundenen Partikelmaterial bereitgestellt werden. Dieser Körper ist zunächst in dem umliegenden, ungebundenen Partikelmaterial eingebettet und kann nach Abschluß des Bauvorganges aus dem Partikelbett entnommen werden.

Wird beispielsweise bei einem derartigen Rapid-Prototyping-Verfahren als Partikelmaterial ein Quarzsand verwendet und als Bindemittel ein Furanharz, kann mit Hilfe einer schwefeligen Säure als Härter eine Gussform hergestellt werden, die aus üblicherweise bei der Formherstellung verwendeten und daher dem Fachmann bekannten Materialien besteht.

Der Binder besteht dabei größtenteils aus Furfurylalkohol, Stickstoff, Wasser und freiem Formaldehyd. Als Aktivator wird üblicherweise eine starke Schwefelsäure eingesetzt.

Ein wesentlicher Nachteil bei derartig hergestellten Formteilen ist die Verwendung umweltschädlicher Bestandteile im Bindermaterialsystem. Insbesondere bei der Formherstellung selbst, beim Abguss, bei der Entformung sowie bei der Entsorgung des Gießsandes ist deswegen ein beträchtlicher Aufwand beim Umgang und bei der Verwertung mit diesem Bindermaterialsystem notwendig.

Beim Gießen zerfallen die organischen Binder in gasförmige Substanzen. Diese Gasentwicklung kann das Gussteil negativ beeinflussen. Die Gase können in das Metall eindringen und zu einer Porosität des Gusswerkstückes führen. Die Qualität des Gussteils kann damit wesentlich beeinträchtigt werden.

Dass das Bindermaterial in organische Substanzen zerfällt ist bei derartigen Modellen jedoch wichtig, um das spätere Entkernen des Metallgussteils sicher zu stellen.

Die Crackprodukte beim Zerfall des Binders sind darüber hinaus umweltgefährdend und müssen besonders entsorgt werden.

Die Entformung des Gussteils kann dabei energieintensiv sein, da der Binder thermisch zerstört werden muss, um ihn so aus Kavitäten des Gussteils zu entfernen.

Der als Partikelmaterial verwendete Sand muss nach dem Guss thermisch wieder aufbereitet werden. Das bedeutet, dass restliche Bindemittelmengen durch massive Erwärmung des Sandes verbrannt werden. Dies ist zum einen wiederum sehr energieintensiv und zum anderen entstehen wieder umweltgefährdende Reaktionsprodukte. Als Alternative kann der Sand deponiert werden, was unter Umweltaspekten ebenfalls wenig zuträglich ist.

Im Allgemeinen lassen sich aber organische Binder sehr gut im Schichtbauverfahren verarbeiten. Dazu wird generell ein Mehrkomponentenharz verwendet. Neben der schon oben beschriebenen Möglichkeit zwei Komponenten nacheinander auf den unbehandelten Sand selektiv aufzutragen, kann ebenso eine Reaktionskomponente in den Sand eingemischt werden und eine zweite Komponente per Dosierung selektiv zugegeben. Entweder reicht dies dann bereits für eine selektive Verbindung der Sandpartikel aus, oder aber während oder nach dem Bauprozess wird mit thermischer Energie oder einem reaktiven Gas nachgeholfen.

In der US 5,204,055 wird vorgeschlagen, Metallgussformen über 3D-Drucken herzustellen. Dabei werden Aluminiumoxid-Keramik-Partikel als Grundmaterial und als Bindemittel eine koloidale Silika-Suspension verwendet. Das Materialsystem ist jedoch für den Sandguss wegen der schlechten Entkernbarkeit wenig geeignet und unterscheidet sich wesentlich von den üblichen Sandgusseigenschaften.

Eine derart hergestellte Form liegt nach dem Bauprozess in einer Grünteilfestigkeit vor. Für die endgültige Festigkeit muss die Form noch thermisch ausgelagert werden. Dabei können Risse in der Form entstehen oder das Bauteil sich aufgrund von Schwund während der thermischen Auslagerung in seinen Maßen verändern.

Das Entformen solcher Kerne nach dem Guss erfolgt dann in einer speziellen Lösung oder aber per Wasserstrahl.

Von der Firma Z-Corp. ist es dem Fachmann bekannt, dass diese für die Herstellung von Gussformen ein auf Gips basierendes System verwendet. Nachteil bei der Verwendung derartiger Materialien ist, dass die Gusseigenschaften nicht dem Sandguss entsprechen. Somit ist die Vergleichbarkeit zum Sandguss nicht gegeben.

Ausgehend hiervon ist es Aufgabe der vorliegenden Erfindung ein Verfahren zum schichtweisen Aufbau von Modellen, das heißt Gußformen und Gusskernen bereitzustellen, das mit umweltfreundlichen Bindemitteln arbeitet, die die notwendigen Formstoffkriterien, wie zum Beispiel Festigkeit und Formstabilität erfüllen. Darüber hinaus soll die Vergleichbarkeit der Gusseigenschaften zum herkömmlichen Sandguss gegeben sein.

Diese Aufgabe wird gelöst mit einem Verfahren zum schichtweisen Aufbau von Modellen, wobei auf eine Bauplattform zumindest ein erstes Material und daran anschließend selektiv ein zweites Material schichtweise aufgetragen wird und diese beiden Auftragungsschritte wiederholt werden, bis ein gewünschtes Modell erhalten wird und die beiden Materialien bei einem geeigneten Mischungsverhältnis einen Festkörper bilden, wobei das erste Material einen Formsand und das erste oder/und das zweite Material ein Bindemittel, umfassend ein Salzkristallbindermaterial oder/und ein Proteinbindermaterial, aufweisen.

Die Verwendung von Salzkristallbindemitteln oder Proteinbindemitteln beim Einsatz in einem Verfahren zum schichtweisen Aufbau von Modellen zeichnet sich insbesondere durch seine Umweltfreundlichkeit während der Herstellung, dem Umgang der Formen, dem Abguss und der Entsorgung aus.

Weiterhin können mit einem derartigen Verfahren und der Verwendung von Gießerei üblichen Formstoffen Modelle mit sehr guten Materaleigenschaften, es besteht eine hohe Vergleichbarkeit zum Sandguss, erzielt werden.

Nach dem Abguss solcher Formen kann das Gussteil sehr einfach durch Einlegen in Wasser oder Ausschütteln entformt werden. Dies ist aufgrund der sehr guten Wasserlöslichkeit von Salzkristallbildnern möglich.

Gemäß einer bevorzugten Ausführungsform des erfindungsgemäßen Verfahrens ist das Bindemittel in das erste Material eingemischt.

Vorteilhafterweise ist bei dem erfindungsgemäßen Verfahren das erste Material ein Materialgemisch, das das Bindermaterial und einen Formsand aufweist.

So ist es möglich, dass eine Art Salz dem Sand zugemischt wird. Anschließend wird dieser Mischung selektiv Wasser zugegeben. Das Salz löst sich im Wasser und umhüllt den Sand. Nach anschließender Trocknung des Sandes kristallisiert das Salz wieder aus und bindet die Sandpartikel.

Dieses Material verhält sich beim Gießen absolut neutral. Die Schmelztemperatur des Salzes liegt deutlich höher als die des Metalls. Es entsteht daher kein Gas beim Gießen, jedoch ist es erforderlich, dass die Trocknung des Formstoffes optimal erfolgt, da ansonsten ein Siedeverzug auftreten kann. In der konventionellen Kern-Schuss-technik wird dazu Mikrowellenstrahlung eingesetzt, um den Kern zu trocknen. Dies wäre auch bei dem erfindungsgemäßen Verfahren möglich. Zudem kann das Modell auch mit Warmluft gespült werden.

Nach dem Gießen kann die Form durch tauchen in Wasser entkernt werden. Das Wasser löst das Salz und damit die Bindung.

Der Sand kann nach dem Guss wiederverwendet werden. Ein weiterer Vorteil liegt in der Geruchsneutralität beim Gießen gegenüber organischen Bindemitteln.

Daneben ist es ebenso möglich dass bei dem Verfahren gemäß der vorliegenden Erfindung der Formsand mit dem Bindemittel gecoatet ist.

Gemäß einer bevorzugten Ausführungsform des erfindungsgemäßen Verfahrens ist das Bindemittel in das zweite Material eingemischt.

Gute Ergebnisse wurden erzielt, wenn das erste Material vorzugsweise Formsand und das zweite Material vorzugsweise ein Lösungsmittel aufweisen.

Wenn das Lösungsmittel im wesentlichen Wasser umfasst, ist das Lösungsmittel absolut umweltverträglich und äußert preiswert.

Bevorzgterweise kann das zweite Material mittels Tröpfchenerzeugungstechnik aufgetragen werden.

Es ist daneben ebenso möglich, das zweite Material mittels Siebdrucktechnik oder durch Sprayen durch eine Maske aufzutragen.

Besonders bevorzugt wird bei dem erfindungsgemäßen Verfahren das Lösungsmittel nach einer entsprechenden Reaktionszeit durch Trocknung entfernt.

Bei dem erfindungsgemäßen Verfahren weist der Formsand vorzugsweise Quarzsande, Zirkonsande, Olivinsande oder/und Schamottsande auf.

Das Bindemittel, das bei dem erfindungsgemäßen Verfahren eingesetzt wird, basiert vorzugsweise auf Magnesiumsulfat, Natriumpolyphosphat oder/und Protein.

Das beschriebene erfindungsgemäße Verfahren hat sich insbesondere beim Einsatz zum Herstellen von Bauteilen als Formen für den Metallguss bewährt.

Zur näheren Erläuterung wird die Erfindung anhand bevorzugter Ausführungsbeispiele nachfolgend näher beschrieben.

Im folgenden wird ein erfindungsgemäßes Verfahren zur schichtweisen Herstellung von Gießereiformen beschrieben.

Bei heute eingesetzten Verfahren wird Bindermaterial mit Formstoffgrundmaterial, in der Regel Quarzsand, angemischt und schichtenweise mit Hilfe eines Beschichters in dünnen Schichten auf eine absenkbare Bauplattform in abgegrenzten Bereichen abgelegt. Mit einem computergesteuerten Druckkopf wird Aktivator an den gewünschten Querschnittstellen des zu generierenden Bauteils auf die poröse Sandschicht eindosiert. Durch Wiederholen der Schritte, Absenken der Bauplattform um eine Schichtstärke, Auftragen einer dünnen Schicht bestehend aus Sand und Binder sowie selektives Eindosieren von Aktivator entsteht so sukzessive das gewünschte Bauteil.

Erfindungsgemäß weist das Bindemittel ein Salz auf. Daneben könnte es auch ein Protein als Bindemittel aufweisen.

Dabei kann der Binder entweder vor der Verarbeitung im schichtenweisen Aufbau dem Sand vorgemischt sein oder als Partikelmaterial dem Sand beigemengt sein. Darüber hinaus ist es möglich den Binder in Lösung oder/und Verdünnung mittels Dosierkopf selektiv entsprechend den herzustellenden Querschnittsflächen aufzutragen.

Im Schichtbauverfahren kann das Bindemittel auf verschiedene Weise verwendet werden. Zum einen wäre es möglich, dass der Binder als Feststoffpartikelmaterial in den Sand gemischt wird. Das Gemisch wird dann schichtweise auf ein Baufeld aufgetragen. Anschlißend wird die jeweilige Querschnittsfläche des Bauteils mit Wasser oder einem anderen Lösungsmittel mittels Tropfenerzeuger (alternativ Siebdruckverfahren, Spray durch Maske) bedruckt. Nach kurzer Reaktionszeit wird das Wasser durch Trocknung entfernt (Wartezeit, Mikrowelle, Heizstrahler, Warmluft etc.). Der Vorgang startet erneut mit dem Absenken der Bauplattform und einem Schichtauftrag.

Es besteht auch die Möglichkeit das Wasser nach Abschluss des gesamten Bauprozesses aus dem Verbund zu bekommen, allerdings besteht dann die Gefahr, dass die Bauteilgeometrie aufgrund von Diffusionsvorgängen verschwimmt.

Weithin ist es möglich, dass der Sand mit dem Binder vor dem Prozess gecoatet und wie oben beschrieben verwendet wird.

Eine weiter Möglichkeit ist, dass der unbehandelte Sand mit einem Binder-Wasser-Gemisch bedruckt wird.

Nach dem Bauprozess wird das hergestellte Modell bei allen Verfahrensvarianten vom umliegenden Material befreit. Der Sand kann in jeder der beschriebenen Verfahrensvariante wiederverwendet werden.

Beim Eindosieren des Lösungsmittels ist es wichtig, dass die Menge genau abgestimmt ist. Einerseits soll genügend Lösungsmittel eindosiert werden, um die Partikel untereinander und mit der darunter liegenden Schicht zu verbinden. Um unerwünschte Diffusion zu vermeiden, die die Konturschärfe und Genauigkeit der Modelle beeinträchtigt, darf andererseits auch nicht zu viel Lösungsmittel eindosiert werden.

Besonders gut Ergebnisse konnten erzielt werden, wenn das erste Material einen Formsand, wie beispielsweise Quarzsand, sowie 1,8 Gew.-% LaempeKuhsBinder^{®} (der Firma Laempe) aufweist. Das zweite, einzudosierende Material ist gemäß dem ersten bevorzugten Ausführungsbeispiel 3 Gew.-% Wasser.

Als Proteinbinder für den Gießereineinsatz im vorliegenden erfindungsgemäßen Verfahren eignen sich besonders gut die Proteinbinder GMBond der Firma Hormel.

Auch in Verbindung mit Proteinbindern eignet sich insbesondere Quarzsand als Basismaterial, dem der Proteinbinder beigemengt wurde.

## Patentansprüche

1. Verfahren zum schichtweisen Aufbau von Modellen, wobei auf eine Bauplattform mindestens ein erstes Material und daran anschließend selektiv ein zweites Material schichtweise aufgetragen wird und diese beiden Auftragungsschritte wiederholt werden, bis ein gewünschtes Modell erhalten wird und die beiden Materialien bei einem geeigneten Mischungsverhältnis einen Festkörper bilden, wobei das erste Material einen Formsand und das erste oder/und das zweite Material ein Bindemittel, umfassend ein Salzkristallbindermaterial oder/und ein Proteinbindermaterial, aufweisen.

2. Verfahren nach Anspruch 1, wobei das Bindemittel in das erste Material eingemischt ist.

3. Verfahren nach Anspruch 1 oder 2, wobei das erste Material ein Materialgemisch ist, das das Bindemittel und einen Formsand aufweist.

4. Verfahren nach einem der vorhergehenden Ansprüche, wobei der Formsand mit dem Bindemittel gecoatet ist.

5. Verfahren nach einem der vorhergehenden Ansprüche, wobei das Bindemittel in das zweite Material eingemischt ist.

6. Verfahren nach einem der vorhergehenden Ansprüche, wobei das erste Material Formsand und Bindemittel und das zweite Material ein Lösungsmittel aufweist.

7. Verfahren nach einem der vorhergehenden Ansprüche, wobei das Lösungsmittel im wesentlichen Wasser aufweist.

8. Verfahren nach einem der vorhergehenden Ansprüche, wobei das zweite Material mittels Tröpfchenerzeugungstechnik aufgetragen wird.

9. Verfahren nach einem der vorhergehenden Ansprüche, wobei das zweite Material mittels Siebdrucktechnik oder durch Sprayen durch eine Maske aufgetragen wird.

10. Verfahren nach einem der vorhergehenden Ansprüche, wobei das Lösungsmittel nach einer entsprechenden Reaktionszeit durch Trocknung entfernt wird.

11. Verfahren nach einem der vorhergehenden Ansprüche, wobei der Formsand Quarzsande, Zirkonsande, Olivinsande oder/und Schamottsande aufweist.

12. Verfahren nach einem der vorhergehenden Ansprüche, wobei das Bindemittel Magnesiumsulfat, Natriumpolyphosphat oder/und Proteine aufweist.

13. Verwendung des Verfahrens nach einem der Ansprüche 1 bis 11 zum Herstellen von Bauteilen als Formen für den Metallguss.

## Claims

1. A method of layered structuring of models, wherein at least a first material and then selectively a second material is applied in layers onto a building platform, and these two steps of application are repeated until a desired model is obtained and both materials, at a suitable mixing ratio, form a solid body, said first material including a moulding sand and said first or/and said second material including a binding agent which comprises a salt crystal binding material or/and a protein binding material.

2. Method according to claim 1, wherein the binding agent is incorporated into the first material.

3. Method according to claim 1 or 2, wherein the first material is a material mixture comprising the binding agent and a moulding sand.

4. Method according to any one of the preceding claims, wherein the moulding sand is coated with the binding agent.

5. Method according to any one of the preceding claims, wherein the binding agent is incorporated into the second material.

6. Method according to any one of the preceding claims, wherein the first material comprises moulding sand and a binding agent and the second material comprises a solvent.

7. Method according to any one of the preceding claims, wherein the solvent substantially comprises water.

8. Method according to any one of the preceding claims, wherein the second material is applied by means of a droplet forming technique.

9. Method according to any one of the preceding claims, wherein the second material is applied by means of a silk screen printing technique or by spraying through a mask.

10. Method according to any one of the preceding claims, wherein the solvent is removed by drying after a corresponding reaction time.

11. Method according to any one of the preceding claims, wherein the moulding sand comprises quartz sands, zircon sands, olivine sands or/and fireclay sands.

12. Method according to any one of the preceding claims, wherein the binding agent comprises magnesium sulphate, sodium polyphosphate or/and proteins.

13. Use of the method according to any one of claims 1 to 11 for producing parts as moulds for metal casting.

## Revendications

1. Procédé destiné à constituer des modèles par couches, dans lequel on applique sur une plateforme de construction au moins un premier matériau, et puis, selectivement, un deuxième matériau par couches, et on répête ces deux étapes d'application jusqu'à ce qu'on obtienne un modèle désiré et que les deux matériaux, présentant un rapport de mélange approprié, forment un solide, ledit premier matériau présentant un sable de moulage et ledit premier matériau ou/et ledit deuxième matériau présentant un agent liant qui comporte un matériau liant à base de cristal de sel ou/et un matériau liant à base de protéine.

2. Procédé selon la revendication 1, dans lequel l'agent liant est incorporé dans le premier matériau.

3. Procédé selon la revendication 1 ou 2, dans lequel le premier matériau est un mélange de matériaux comportant l'agent liant et un sable de moulage.

4. Procédé selon l'une quelconque des revendication précédentes, dans lequel le sable de moulage est revêtu de l'agent liant.

5. Procédé selon l'une quelconque des revendication précédentes, dans lequel l'agent liant est incorporé dans le deuxième matériau.

6. Procédé selon l'une quelconque des revendication précédentes, dans lequel le premier matériau comporte du sable de moulage et un agent liant, et le deuxième matériau comporte un solvant.

7. Procédé selon l'une quelconque des revendication précédentes, dans lequel le solvant comporte essentiellement de l'eau.

8. Procédé selon l'une quelconque des revendication précédentes, dans lequel le deuxième matériau est appliqué au moyen d'une technique à formation de goutelettes.

9. Procédé selon l'une quelconque des revendication précédentes, dans lequel le deuxième material est appliqué au moyen d'une technique de sérigraphie ou par atomisation à travers d'un masque.

10. Procédé selon l'une quelconque des revendication précédentes, dans lequel le solvant est éliminé par séchage après un temps de réaction correspondant.

11. Procédé selon l'une quelconque des revendication précédentes, dans lequel le sable de moulage comporte des sables de quartz, des sables de zircon, des sables d'olivine ou/et des sables à la chamotte réfractaire.

12. Procédé selon l'une quelconque des revendication précédentes, dans lequel l'agent liant comporte du sulfate de magnesium, du polyphosphate de sodium ou/et des protéines.

13. Utilisation du procédé selon l'une quelconque des revendications 1 à 11 pour la production de composants parts en tant que moules pour la fonte de métaux.
